# EUROPÄISCHE PATENTSCHRIFT

(11) **EP 4 526 939 B1**
(45) Veröffentlichungstag und Bekanntmachung des Hinweises auf die Patenterteilung: **18.02.2026**
(21) Anmeldenummer: 23720244.5
(22) Anmeldetag: 13.04.2023
(51) Int. Cl.: H01M 8/0206, H01M 8/0254, H01M 8/0297, H01M 8/026

(54) **VERFAHREN ZUR HERSTELLUNG EINER BIPOLARPLATTE**
PROCESS FOR MANUFACTURING A BIPOLAR PLATE
PROCÉDÉ POUR FABRIQUER UNE PLAQUE BIPLOAIRE

(30) Priorität: 18.05.2022 DE 102022204913
(43) Veröffentlichungstag der Anmeldung: 26.03.2025
(73) Patentinhaber: Robert Bosch GmbH, 70442 Stuttgart (DE)
(72) Erfinder: HOLZ, Dieter, 71563 Affalterbach (DE); WETZL, Franz, 74395 Mundelsheim (DE); KRUEGER, Philipp, 71711 Hoepfigheim (DE)
(86) Internationale Anmeldenummer: PCT/EP2023/059606
(87) Internationale Veröffentlichungsnummer: WO 2023/222311

(56) Entgegenhaltungen:
- EP-A1- 2 025 027
- WO-A1-2006/043505
- DE-A1- 102019 202 493

## Beschreibung

### Technisches Gebiet

Die Erfindung bezieht sich auf ein Verfahren zur Herstellung einer Bipolarplatte mit einem Anodenblech und einem Kathodenblech einer Brennstoffzelle. Des Weiteren bezieht sich die Erfindung auf die Verwendung des Verfahrens zur Herstellung einer Bipolarplatte.

### Stand der Technik

DE 20 2021 104 930 U1 hat eine Widerstandsschweißanlage zum Gegenstand, welche insbesondere dem Herstellen von Bipolarplatten für Brennstoffzellen dient. Dabei wird beim Schweißen ein zusätzliches Drahtmaterial in der Art eines Hilfsfügepartners, unabhängig von einem Folienmaterial bereitgestellt. Die dargelegte Vorrichtung beziehungsweise das Verfahren beruht auf dem Konzept, einen Schweißbuckel oder dergleichen durch den beschriebenen Hilfsfügepartner zu bilden. Gleichwohl ist eine Verwendung des Hilfsfügepartners in Gestalt des zusätzlichen Drahtes zusammen mit weiterhin zusätzlich vorhandenen Schweißbuckeln möglich, etwa wenn zusätzlich insbesondere punktförmige Schweißverbindungen weiterhin gewünscht werden. Durch die dargelegte Vorrichtung beziehungsweise das Verfahren werden eine Minimierung von Ausschuss und eine Fehlproduktion, hohe prozessuale Güte sowie eine zumindest teilweise Automatisierung, insbesondere hinsichtlich hoher Stückzahlen beziehungsweise kurzer Taktzeiten angestrebt.

DE 10 2019 210 633 A1 bezieht sich auf ein Verfahren zur Herstellung einer Verteilerstruktur, insbesondere einer Bipolarplatte für eine Brennstoffzelle aus mehreren, in Stapelform angeordneten Komponenten. Dabei besteht die Möglichkeit, die Komponenten einer Verteilerstruktur, insbesondere einer Bipolarplatte, nämlich eine Kathodenstruktur, einen Separator und eine Anodenstruktur in einem Arbeitsgang mittels Widerstandsschweißens stoffschlüssig miteinander zu verbinden. Außerdem kann eine parallele Herstellung mehrerer Schweißnähte beziehungsweise Schweißpunkte durchgeführt werden, um insbesondere bei der Serienfertigung eine geringe Taktzeit zu erreichen.

DE 10 2010 007 705 A1 hat ein Verfahren zum Herstellen einer Bipolarplatte für eine Brennstoffzelle zum Gegenstand. Dabei werden die einzelnen Platten mittels Löten stoffschlüssig miteinander verbunden, um Nachteile anderer Verfahren, wie dem Laser- oder Widerstandsschweißen, etwa längere Fertigungszeiten und -kosten oder lokale Temperaturbelastungen, welche zu Beschädigungen der Bipolarplatte führen können, zu vermeiden.

Eine Kernkomponente von Brennstoffzellen ist der Brennstoffzellenstapel, in dem die chemische Reaktion zwischen Sauerstoff und Wasserstoff und somit die Stromerzeugung stattfindet. Der Stapel kann aus mehreren hundert Einzelzellen aufgebaut sein, die wiederum aus einem Stapel aus Anodenblech, der Membran-Elektroden-Einheit und dem Kathodenblech bestehen. Die Verbindung aus Anoden- und Kathodenblech bildet die Bipolarplatte. Hauptaufgabe der Bipolarplatte ist das Führen und Separieren von Wasserstoff, Luft und des Kühlmediums, beispielsweise dargestellt durch ein Wasser-/Glykolgemisch. Ein minimaler elektrischer Widerstand innerhalb der Bipolarplatte ist hinsichtlich der Leistung der Brennstoffzelle anzustreben. Die elektrische Kontaktierung erfolgt dahingehend, dass die Anoden- und Kathodenplatte einer Brennstoffzelle im aktiven Bereich üblicherweise mit kurzen Laserschweißnähten verbunden werden, um einen möglichst geringen Übergangswiderstand zwischen Anodenblech und Kathodenblech zu erreichen. Die Kanalstruktur des aktiven Bereichs wird üblicherweise durch einen Umformprozess, wie zum Beispiel das Prägen hergestellt. Prinzipbedingt wird beim Laserschweißen das obenliegende Blech durchgeschweißt, um in das darunterliegende Blech ein- oder dieses ebenfalls durchzuschweißen zur Herstellung der elektrischen Kontaktierung. Hierdurch besteht die Gefahr, dass eine Leckage durch Auftreten einer Fehlstelle nach oben oder unten entstehen kann. Zum Abdichten nach außen und nach innen zwischen den einzelnen Medien der Ports von Anoden- und Kathodenblech wird üblicherweise die Dichtigkeit mittels Laserstrahlschweißens erreicht. Dies erfordert zum einen aufwändige Niederhaltewerkzeuge, um einen spaltfreien Kontakt zwischen Anodenblech und Kathodenblech sicherzustellen, da ansonsten mit dem Auftreten von Undichtigkeiten zu rechnen ist. Anstelle des Laserstrahlschweißens kann auf das Widerstandsschweißen zurückgegriffen werden, welches die genannten Nachteile, d. h. ein Durchschweißen des obenliegenden Blechs und ein aufwändiges Niederhaltekonzept, welche dem Laserstrahlschweißen innewohnen, nicht aufweist.

Beim Widerstandsschweißen entsteht eine Fügeverbindung zwischen den Blechen, ohne dass eine Schmelze bis zur Ober- beziehungsweise Unterseite entsteht. Dies liegt darin begründet, dass der Ohm'sche Widerstand an der Kontaktfläche zwischen dem Anodenblech und dem Kathodenblech größer ist als im durchströmten Bauteil und somit der größte Energieanteil an dieser Stelle in Wärme übergeht und die Schmelze erzeugt. Somit kann verfahrensbedingt eine Leckagestelle vermieden werden. Darüber hinaus wird mit den Elektroden eine erforderliche Fügekraft auf die Bauteile aufgebracht, die einen eventuell vorhandenen Spalt schließt. Sollte ein Spalt bestehen bleiben, was aufgrund der geringen Bauteilsteifigkeit der dünnen Bleche äußerst unwahrscheinlich ist, so fließt kein Strom, so dass auch keine Fügeverbindung ausgebildet wird.

### Darstellung der Erfindung

Erfindungsgemäß wird ein Verfahren zur Herstellung einer Bipolarplatte mit einem Anodenblech und einem Kathodenblech einer Brennstoffzelle mit zumindest nachfolgenden Verfahrensschritten vorgeschlagen:
a) Erzeugung eines ersten Prägeschritts in dem Anodenblech oder dem Kathodenblech zur Formung von Kanälen mit möglichst großen Verrundungen zur Erzeugung einer ersten Kanaltiefe,
b) in einem Nachprägeschritt werden im Anodenblech und/oder im Kathodenblech reduzierte Radien und eine erforderliche Kanaltiefe sowie ebene Bereiche erzeugt,
c) durch geeignete Ausbildung des Prägewerkzeugs verbleiben bei Durchführung von Verfahrensschritt b) in dem Anodenblech und/oder dem Kathodenblech Erhebungen in der ersten Kanaltiefe,
d) Erzeugung von Heftpunkten durch Widerstandsschweißen an den Erhebungen zwischen dem Anodenblech oder dem Kathodenblech und
e) Erzeugung einer Fügenaht zur Sicherstellung einer Dichtfunktion zwischen dem Anodenblech und dem Kathodenblech.

Durch die erfindungsgemäß vorgeschlagene Lösung können in den sehr dünnen Anoden- beziehungsweise Kathodenblechen, die eine Dicke von < 300 µm, insbesondere < 80µm aufweisen, Schweißbuckel erzeugt werden, die eine Kontaktierung mittels Widerstandsschweißens mit großer Elektrode ermöglichen und somit verfahrensbedingt eine Leckage vermeiden. Werden weitere Schweißbuckel in Gestalt von Heftpunkten im Bereich der Dichtschweißung zur Realisierung eines technischen Null-Spalts zwischen den aufeinanderliegenden Anoden- und Kathodenblechen erzeugt, so kann ein Dichtschweißen beispielsweise mittels eines Laserstrahls ohne aufwändige Niederhaltetechnik erfolgen, was einer Großserienproduktion äußerst förderlich ist.

In vorteilhafter Weiterbildung des erfindungsgemäß vorgeschlagenen Verfahrens werden Anoden- beziehungsweise Kathodenbleche eingesetzt, deren Blechstärke unterhalb von 300 µm, insbesondere unterhalb von 100 µm liegt.

In weiterer, vorteilhafter Ausgestaltung des erfindungsgemäß vorgeschlagenen Verfahrens wird als bevorzugtes Widerstandsschweißverfahren das Kondensatorentladungsschweißen eingesetzt. Dadurch lassen sich in vorteilhafter Weise relativ hohe, pulsartig auftretende Ströme erzeugen. Ein weiterer Vorteil beim Kondensatorentladungsschweißen liegt in der Möglichkeit der Realisierung kurzer Taktzeiten.

Beim erfindungsgemäß vorgeschlagenen Verfahren kann gemäß d) die Fügenaht nach Vornahme der Heftpunkte durch ein Laserschweißverfahren hergestellt werden, welches automatisiert verwirklicht werden kann und die Erzeugung hoher Stückzahlen ermöglicht.

In vorteilhafter Weise werden beim erfindungsgemäß vorgeschlagenen Verfahren bei dem ersten Trägerschritt gemäß Verfahrensschritt a) Kanäle mit Kanalradien erzeugt, die eine Ausbildung einer die erforderliche Kanaltiefe übersteigenden ersten Kanaltiefe ermöglichen. Dadurch wird bereits beim ersten Prägeschritt eine Materialvorhaltung vorgenommen, welche in vorteilhafter Weise bei der Durchführung des Nachprägeschritts weiter verformt werden kann.

In vorteilhafter Weise ermöglicht das erfindungsgemäß vorgeschlagene Verfahren im Rahmen des Nachprägeschritts gemäß Verfahrensschritt b) die im ersten Prägeschritt gestalteten Kanalradien nachzuprägen, eine eckige Kanalform auszuformen und ebene Anlageflächen auszuprägen.

In vorteilhafter Weiterbildung des erfindungsgemäß vorgeschlagenen Verfahrens wird bei der Durchführung des Nachprägeschritts gemäß den Verfahrensschritten b) und c) ein ein Oberwerkzeug und ein Unterwerkzeug umfassendes Prägewerkzeug eingesetzt, mit dessen Oberwerkzeug die eckige Kanalform einerseits und mit dessen Aussparungen aufweisendem Unterwerkzeug zwischen in der ersten Kanaltiefe verbleibenden Erhebungen durch Rückpressen in der erforderlichen Kanaltiefe ausgebildete Bereiche andererseits erzeugt werden.

In vorteilhafter Weise lassen sich durch das erfindungsgemäß vorgeschlagene Verfahren Erhebungen ausbilden, die einerseits als einfache Schweißbuckel oder als Doppelbuckel oder als verkleinert ausgeführter Schweißbuckel ausgeführt werden können.

In vorteilhafter Weiterbildung des erfindungsgemäß vorgeschlagenen Verfahrens dienen die gemäß Verfahrensschritt d) erzeugten Heftpunkte, die mittels Widerstandsschweißens erzeugt werden, zur Darstellung eines technischen Null-Spalts zwischen dem aufeinanderliegenden Anodenblech und dem Kathodenblech der herzustellenden Bipolarplatte.

In vorteilhafter Weiterbildung des erfindungsgemäß vorgeschlagenen Verfahrens kann die gemäß Verfahrensschritt e) erzeugte Fügenaht durch Laserstrahlschweißen gefertigt werden. Alternativ besteht die Möglichkeit, die Dichtnaht durch Schmelzschweißverfahren, wie zum Beispiel Elektronenstrahlschweißen, Laserstrahlschweißen sowie auch durch Plasmaschweißen herzustellen.

In vorteilhafter Weise werden beim erfindungsgemäß vorgeschlagenen Verfahren die Heftpunkte innerhalb oder außerhalb eines abzudichtenden Bereichs angeordnet. Die Heftpunkte können sowohl links als auch rechts von der durchgängigen Schweißnaht angeordnet werden. Alternativ erfolgt die Ausführung der Dichtnaht derart, dass diese sich in Form einer Schlangenlinie abwechselnd links und rechts an den Heftpunkten vorbei erstreckt.

Darüber hinaus bezieht sich die Erfindung auf die Verwendung des Verfahrens zur Herstellung einer Bipolarplatte, mindestens ein Anodenblech und mindestens ein Kathodenblech enthaltend.

### Vorteile der Erfindung

Die erfindungsgemäß vorgeschlagene Lösung zeichnet sich dadurch aus, dass das Widerstandsschweißen, insbesondere dargestellt durch das Kondensatorentladungsschweißen in der Großserienfertigung für Bipolarplatten einerseits zur Herstellung der elektrischen Kontaktierung und andererseits durch das Vorheften zum Abdichten eingesetzt werden kann. Dadurch lassen sich eine Reihe von Vorteilen verglichen mit den aus dem Stand der Technik bekannten Lösungen erzielen. Verfahrensbedingt entsteht die Fügeverbindung beim Widerstandsschweißen in der Kontaktfläche in Form einer Schweißlinse. Dadurch ist eine Leckage nach oben oder unten ohne schmelzflüssiges Material nicht möglich, so dass sich eine reduzierte Ausschlusswahrscheinlichkeit durch Leckagen im Flowfield einer herzustellenden Bipolarplatte ergibt. Durch ein Vorheften von Anoden- und Kathodenblech wird ein technischer Null-Spalt in Schweißnahtnähe einer später vorzunehmenden Laserschweißung sichergestellt, so dass nur noch ein Niederhalten der Gesamtplatte erforderlich ist, um das Arbeiten in Fokuslage für die herzustellende Fügenaht sicherzustellen. Hier ergibt sich ein reduzierter Aufwand für die Darstellung des Niederhalters zum Schweißen der Dichtkonturen.

Durch eine gezielte Stromführung, mittels der im ersten Prägeschritt und im nachfolgenden Nachprägeschritt ausgebildeten Prägestrukturen wird der Stromfluss konzentriert, so dass die durch das Widerstandsschweißen zur Verfügung stehende Energie ausreichend ist, um alle Verbindungen mit wenigen Stromimpulsen zu schweißen. Dadurch wird die Möglichkeit geschaffen, elektrische Kontaktierungen mittels Schweißens herzustellen sowie Vorheftungen vorzunehmen, was beides in einem Prozessschritt erreicht werden kann.

Eine Integration der Widerstandsschweißanlage in eine Stanzanlage, in der die Prägevorgänge vorgenommen werden, ist denkbar, so dass in Folgeprozessen vom leichteren Handling einer robuster und steifer hergestellten Bipolarplatte profitiert werden kann.

Die thermische Ausdehnung und Schrumpfung während des Schweißvorgangs findet primär in den Prägestrukturen statt, so dass der Bauteilverzug entsprechend minimiert werden kann.

Durch die vorstehend erwähnte gezielte Stromführung können kürzere Schweißzeiten realisiert werden, was zu weniger Anlauffarben und Materialumwandlungen führt, was wiederum die Korrosionsbeständigkeit günstig beeinflusst.

### Kurze Beschreibung der Zeichnungen

Ausführungsformen der Erfindung werden anhand der Zeichnungen und der nachfolgenden Beschreibung näher erläutert.

Es zeigen:
- Figur 1: einen Querschnitt durch eine Brennstoffzelle und eine Bipolarplatte
- Figur 2: eine Darstellung einer Kanalstruktur aus Anoden- und Kathodenblech mit Schweißnähten zur Reduzierung des Durchgangswiderstands,
- Figur 3: eine linienförmige Auflage von Kathodenblech und Anodenblech,
- Figur 4: eine schematische Darstellung einer Widerstandsschweißverbindung,
- Figur 5: die Darstellung einer Kanalform nach einem ersten Prägeschritt,
- Figur 6: die Kanalform nach Durchführung eines Nachprägeschritts mit teilweise geschnittener, als Schweißbuckel dienender Erhebung,
- Figur 7: eine Ausformung der Kanalstruktur mittels eines Prägewerkzeugs, ein Oberwerkzeug und ein Unterwerkzeug umfassend,
- Figur 8: eine Skizze einer als Doppelbuckel ausgebildeten Erhebung,
- Figur 9: eine Skizze einer verkleinerten Erhebung, die als Schweißdeckel dient und
- Figur 10: die Darstellung von Heftpunkten zur Darstellung eines technischen Null-Spalts sowie einer sich durchgehend erstreckenden Fügenaht.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

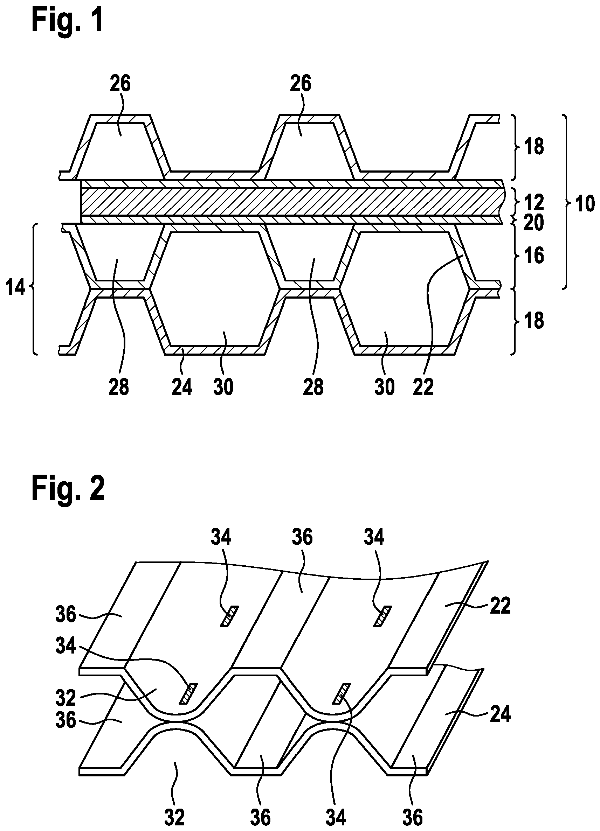

Figur 1 zeigt einen Querschnitt durch eine Brennstoffzelle 10 sowie eine Bipolarplatte 14. Die Brennstoffzelle 10 umfasst neben der Bipolarplatte 14 eine Membran-Elektroden-Einheit 12 (MEA). Durch die Membran-Elektroden-Einheit 12 verläuft jeweils eine Gasdiffusionslage 20. Eine Kathode ist mit Bezugszeichen 18 gekennzeichnet, eine Anode trägt das Bezugszeichen 16. Aus der Darstellung gemäß Figur 1 geht hervor, dass sich unterhalb der Membran-Elektroden-Einheit 12 die Bipolarplatte 14 erstreckt, die im Wesentlichen ein Anodenblech 22 sowie ein Kathodenblech 24 umfasst. Im Kathodenblech 24 und im Anodenblech 22 verlaufen Kanäle 32 für eine Kühlmediumströmung 30, wobei das Kühlmedium im Allgemeinen ein Wasser-Glykol-Gemisch ist. Darüber hinaus verlaufen Kanäle 32 im Anodenblech 22, die von einer Wasserstoffströmung 28 passiert werden, im Kathodenblech 24 verlaufen Kanäle 32, die von einer Luftströmung 26 passiert werden.

Der Darstellung gemäß Figur 2 ist eine Kanalstruktur aus Anoden- und Kathodenblech 22, 24 mit Schweißnähten zur Reduzierung des Durchgangswiderstands zu entnehmen. Aus der perspektivischen Draufsicht gemäß Figur 2 geht hervor, dass sowohl in das Anodenblech 22 als auch in das Kathodenblech 24 Kanäle 32 eingebracht sind. Am Grund der Kanäle 32 sind einzelne kurze Fügeabschnitte 34 ausgeführt, die beispielsweise als Laserschweißnähte ausgebildet sein können, um einen möglichst geringen Übergangswiderstand zwischen dem Anodenblech 22 und dem Kathodenblech 24 zu erreichen. Beidseits der Kanäle 32 im Anodenblech 22 und im Kathodenblech 24 verlaufen Flachbereiche 36, die unverformt sind und auch als "Lands" bezeichnet werden.

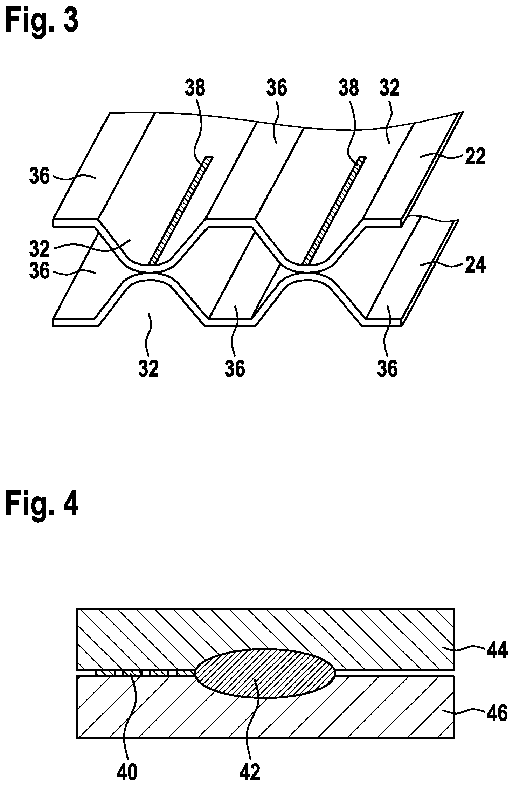

Der Darstellung gemäß Figur 3 ist eine Kanalstruktur zu entnehmen, bei der das Anodenblech 22 und das Kathodenblech 24 am Grund der jeweiligen Kanäle 32 durch linienförmige Fügeabschnitte 38, die ununterbrochen gestaltet sein können, stoffschlüssig miteinander gefügt sind.

Der Darstellung gemäß Figur 4 ist in schematischer Weise eine Widerstandsschweißverbindung zu entnehmen. Aus der Darstellung gemäß Figur 4 geht hervor, dass ein erstes Blech 44 und ein zweites Blech 46 miteinander durch eine Linse 42, insbesondere eine Schweißlinse, stoffschlüssig verbunden sind. Durch die zwischen dem ersten Blech 44 und dem zweiten Blech 46 angeordnete Linse 42 kann ein abzudichtendes Medium 40 gegen ein Durchströmen des Anlagespalts zwischen dem ersten Blech 44 und dem zweiten Blech 46 abgedichtet werden.

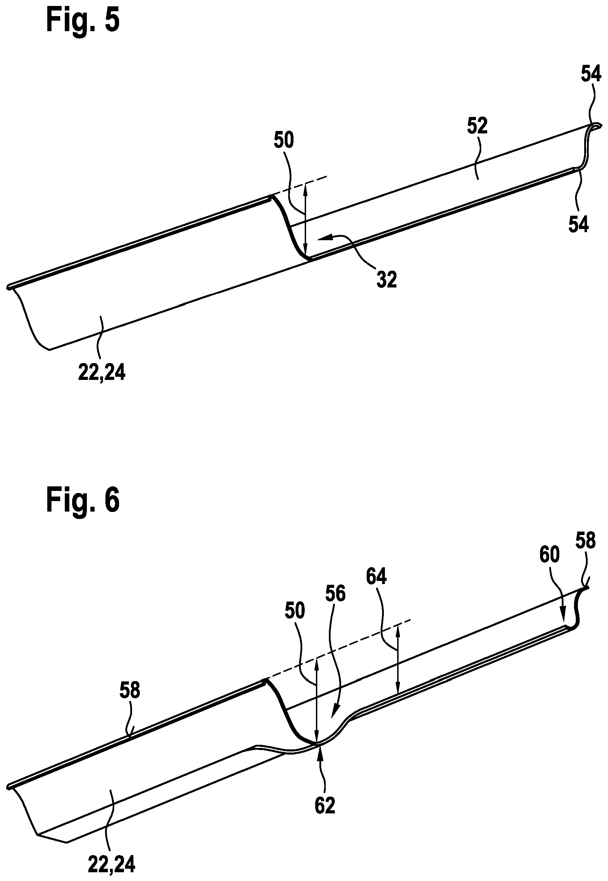

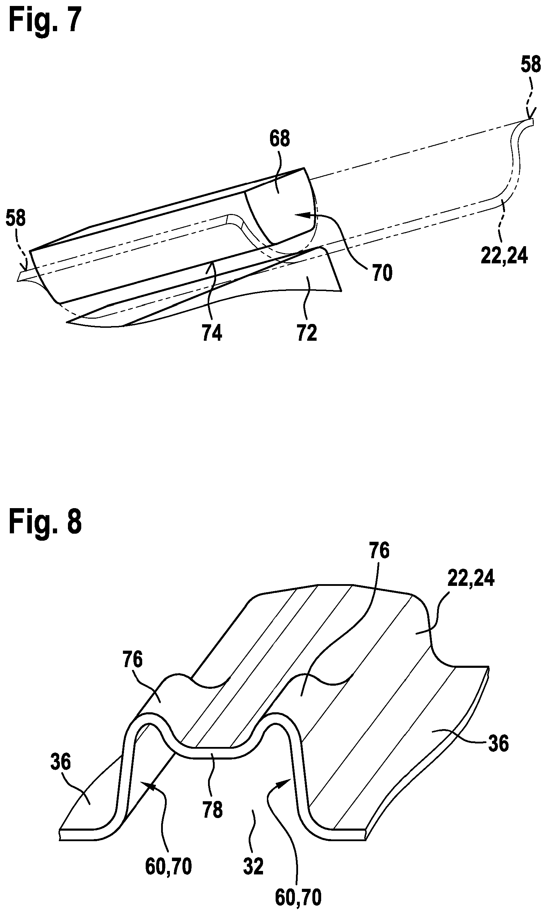

Aus der Darstellung gemäß Figur 5 geht hervor, dass in ein Anodenblech 22 und/oder ein Kathodenblech 24 ein Kanal 32 mittels eines ersten Prägeschritts 52 eingebracht ist. Der erste Prägeschritt 52 erfolgt mittels eines Prägewerkzeugs (vgl. Darstellung gemäß Figur 7), wobei mindestens ein Kanal 32 in einer Kanaltiefe 50 unter Ausbildung relativer großer Kanalradien 54 in das Material des Anodenblechs 22 und/oder des Kathodenblechs 24 eingeprägt wird. Das Anodenblech 22 und/oder das Kathodenblech 24 weisen eine Blechdicke 88 auf, die ≤ 300 µm, insbesondere ≤ 100 µm, insbesondere 80 µm beträgt.

Das gemäß Figur 5 durch den ersten Prägeschritt 52 behandelte Anodenblech 22 beziehungsweise Kathodenblech 24 wird gemäß Figur 6 einem Nachprägeschritt 56 unterzogen, Dabei erfolgt eine Umformung der Kanalradien 54, um eine eckigere Kanalform 60 des Kanals 32 im Anodenblech 22 oder im Kathodenblech 24 zu erreichen. Der Nachprägeschritt 56 erfolgt unter Einsatz eines zweiteiligen Prägewerkzeugs, von dem in der Darstellung gemäß Figur 7 ein Oberwerkzeug 68 sowie ein Unterwerkzeug 72 dargestellt sind. Im Nachprägeschritt 56, der in Figur 6 skizziert ist, erfolgt neben dem Ausbilden der eckigeren Kanalform 60 eine Formung von ebenen Anlageflächen 58. Dadurch ergibt sich eine Verringerung der ersten Kanaltiefe 50, die im ersten Prägeschritt 52 ausgebildet wurde dergestalt, dass eine verringerte erforderliche Kanaltiefe 64 erreicht wird.

Während der Durchführung des Nachprägeschritts 56, wie er in Figur 6 schematisch dargestellt ist, erfolgt jedoch durch das Vorsehen von Aussparungen am Unterwerkzeug 72 ein Verbleib von Erhebungen 62, die als Schweißbuckel ausgebildet sind, im Bereich von Aussparungen im Unterwerkzeug 72. Es verbleiben in den Kanälen 32 des Anodenblechs 22 und/oder des Kathodenblechs 24 jeweils buckelartige Erhebungen 62, die in der ersten Kanaltiefe 50 ausgeführt sind, wohingegen die Abschnitte der Kanäle 32, die sich zwischen den buckelartigen Erhebungen 62 erstrecken, die reduzierte erforderliche Kanaltiefe 64 der Kanäle 32 aufweisen. Im Nachprägeschritt 56 erfolgt mithin ein Rückpressen des Grunds der Kanäle 32 von der im ersten Prägeschritt 52 erreichten Kanaltiefe 50 zurück in die reduzierte erforderliche Kanaltiefe 64.

In im Vergleich zu den Darstellungen in den Figuren 5 und 6 länger verlaufenden Kanälen 32 im Anodenblech 22 und/oder im Kathodenblech 24 ergeben sich somit Kanäle 32, entlang deren Längserstreckung jeweils am Grund des Kanals 32 eine Anzahl von buckelartigen Erhebungen 62, die später als Schweißbuckel dienen, voneinander beabstandet erzeugt werden.

Der Darstellung gemäß Figur 7 ist zu entnehmen, dass das Oberwerkzeug 68 die Endkontur des Kanals 32 aufnimmt und dies im Kanal 32 formt, indem eine Zustellung des Oberwerkzeugs 68 an das Material des Anodenblechs 22 und/oder des Kathodenblechs 24 durchgeführt wird. Das Gegenwerkzeug, d. h. das Unterwerkzeug 72 des Prägewerkzeugs ist hingegen als eine ebene Platte ausgebildet, die im Bereich der Erhebungen 62 die obenstehend bereits erwähnten Aussparungen zur Ausformung der Erhebungen 62 aufweist.

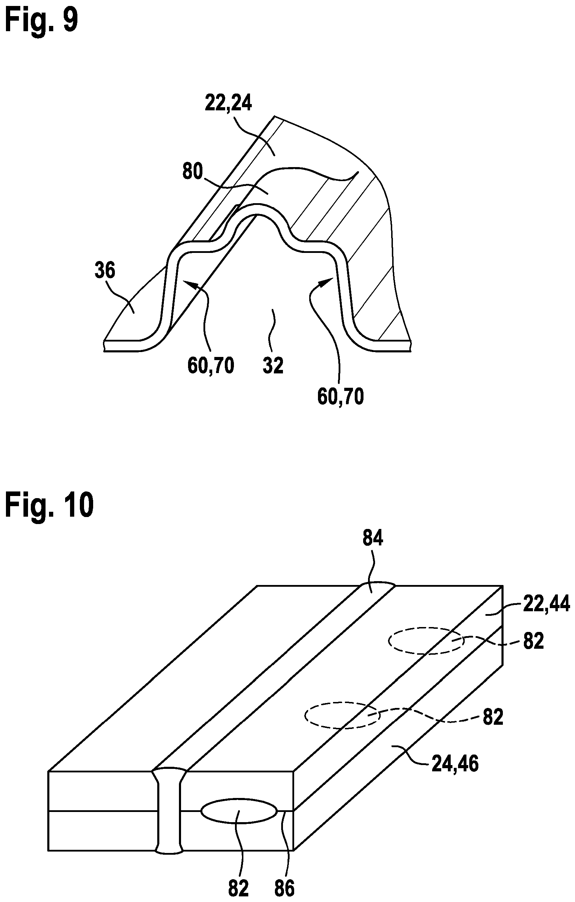

Aus den Darstellungen gemäß den Figuren 8 und 9 gehen einzelne Geometrien der Erhebungen hervor.

Figur 8 zeigt beispielsweise einen Kanal 32, der in einer eckigen Kanalform 60 ausgeführt ist und in dessen Kanalwandkontur 70, insbesondere am Boden eine Erhebung in Gestalt eines Doppelbuckels 76 eingeprägt ist. Die beiden nebeneinanderliegenden Doppelbuckel 76 sind durch einen ebenen Abschnitt 78 voneinander getrennt. Mittels des Doppelbuckels 76, wie er in Figur 8 angedeutet ist, kann zusätzlich eine Zentrierfunktion beim Fügen mit einer Kanal-Land-Struktur erreicht werden. Aus der Darstellung gemäß Figur 8 geht des Weiteren hervor, dass sich neben dem Kanal 32 die unverformten Flachbereiche 36, d. h. die "Lands" erstrecken.

Aus der Darstellung gemäß Figur 9 geht eine Ausführungsvariante des Kanals 32 dahingehend hervor, dass am Grund des Kanals 32, der in einer eckigeren Kanalform 60 ausgebildet ist, d. h. in der Kanalwandkontur 70 eine verkleinerte Erhebung, d. h. ein verkleinerter Schweißbuckel 80 ausgebildet ist. Durch diesen lässt sich eine stärkere Stromkonzentration erreichen.

Aus Figur 10 geht eine Kombination aus widerstandsgeschweißten Heftpunkten 82 und einer durchgehenden, hier beispielsweise als kontinuierliche Fügenaht 84 gestalteten Laserfügenaht hervor. Der Darstellung gemäß Figur 10 ist entnehmbar, dass die einzelnen Heftpunkte 82 in einem Abstand zueinander zwischen dem ersten Blech 44 und dem zweiten Blech 46 beziehungsweise dem Anodenblech 22 und dem Kathodenblech 24 angeordnet sind. Die Funktion der Heftpunkte 82, die im Rahmen des Widerstandsschweißens, beispielsweise durch Kondensatorentladungsschweißen, erzeugt werden, liegt darin, dass mittels der Heftpunkte 82 die Bleche 44, 46 beziehungsweise das Anodenblech 22 und das Kathodenblech 24 zueinander fixiert werden, die nach Herstellung der durchgängigen Fügenaht 84 die Bipolarplatte 14 bilden. Durch die mittels Widerstandsschweißens erzeugten Heftpunkte 82 ist ein technischer Null-Spalt 86 zwischen den Blechen 44, 46 beziehungsweise zwischen dem Anodenblech 22 und dem Kathodenblech 24 für die sich an das Widerstandsschweißen anschließende Erzeugung der durchgängigen Fügenaht 84 sichergestellt.

Aus der Darstellung gemäß Figur 10 geht hervor, dass die sich durchgehend erstreckende Fügenaht 84 beispielsweise als Laserschweißnaht ausgeführt wird. Diese stellt die technisch erforderliche Dichtfunktion dar.

Die Position der Heftpunkte 82 zwischen dem ersten Blech 44 und dem zweiten Blech 46 beziehungsweise dem Anodenblech 22 und dem Kathodenblech 24 kann sowohl außerhalb als auch innerhalb des abzudichtenden Bereichs liegen. Ausgehend von der Annahme, dass sich das abzudichtende Medium rechts von der Fügenaht 84 (Dichtnaht) befindet, welche zwischen den beiden Blechen 44, 46 ausgebildet ist, dann wäre auf der rechten Seite der Fügenaht 84 der innere Bereich und links von der Fügenaht 84 erstreckte sich der äußere Bereich. Durch die Fügenaht 84 können alternativ jedoch auch zwei Medien voneinander getrennt werden, so dass sich eine Abdichtung dieser beiden Medien durch die Fügenaht 84 ergibt. Wenngleich in der Darstellung gemäß Figur 10 die Fügenaht 84 einen im Wesentlichen geraden Verlauf hat, so wäre es alternativ auch möglich, dass sich die Fügenaht 84 schlangenlinien- oder mäanderförmig um die Heftpunkte 82 herum bewegt.

Die durchgängige Fügenaht 84 gemäß der Darstellung in Figur 10 kann außer durch Laserstrahlschweißen auch mittels alternativer Fügeverfahren gefertigt werden. Entsprechend der elektrischen Kontaktierung werden zur Stromführung die zur Realisierung einer Vielzahl von Fügeverbindungen mit einem Strompuls erforderlichen Prägungen im Anodenblech 22 und/oder Kathodenblech 24, wie in Figur 8 und 9 beispielsweise dargestellt, ausgeführt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung einer Bipolarplatte (14) mit einem Anodenblech (22) und einem Kathodenblech (24) einer Brennstoffzelle (10) mit zumindest nachfolgenden Verfahrensschritten:
a) Durchführung eines ersten Prägeschritts (52) in dem Anodenblech (22) und/oder dem Kathodenblech (24) zur Formung von Kanälen (32) mit möglichst großen Verrundungen zur Erzeugung einer ersten Kanaltiefe (50),
b) in einem Nachprägeschritt (56) werden im Anodenblech (22) und/oder im Kathodenblech (24) reduzierte Radien und eine erforderliche Kanaltiefe (64) sowie ebene Bereiche erzeugt, dergestalt, dass
c) durch geeignete Ausbildung des Prägewerkzeugs (68, 72) bei Durchführung von Verfahrensschritt b) in dem Anodenblech (22) und/oder dem Kathodenblech (24) Erhebungen (62, 76, 80) in der ersten Kanaltiefe (50) verbleiben,
d) Erzeugung von Heftpunkten (82) durch Widerstandsschweißen an den Erhebungen (62, 76, 80) zwischen dem Anodenblech (22) und dem Kathodenblech (24) und
e) Erzeugung einer Fügenaht (84) zur Sicherstellung einer Dichtigkeit zwischen dem Anodenblech (22) und dem Kathodenblech (24).

2. Verfahren gemäß Anspruch 1, **dadurch gekennzeichnet, dass** eine Blechdicke (88) des Anodenblechs (22) und des Kathodenblechs (24) unterhalb von 300 µm, insbesondere unterhalb von 100 µm liegt.

3. Verfahren gemäß den Ansprüchen 1 bis 2, **dadurch gekennzeichnet, dass** als Widerstandsschweißverfahren gemäß den Verfahrensschritten d) und/oder e) das Kondensatorentladungsschweißen eingesetzt wird.

4. Verfahren gemäß den Ansprüchen 1 bis 2, **dadurch gekennzeichnet, dass** im Verfahrensschritt e) die Fügenaht (84) durch ein Laserschweißverfahren hergestellt wird.

5. Verfahren gemäß den Ansprüchen 1 bis 4, **dadurch gekennzeichnet, dass** bei dem ersten Prägeschritt (52) gemäß Verfahrensschritt a) Kanäle (32) mit Kanalradien (54) erzeugt werden, die eine Ausbildung einer die erforderliche Kanaltiefe (64) übersteigenden ersten Kanaltiefe (50) ermöglichen.

6. Verfahren gemäß den Ansprüchen 1 bis 5, **dadurch gekennzeichnet, dass** bei dem Nachprägeschritt (56) gemäß Verfahrensschritt b) die Kanalradien (54) nachgeprägt, eine eckige Kanalform (60) ausgeformt und ebene Anlageflächen (36, 78) ausgeprägt werden.

7. Verfahren gemäß Anspruch 6, **dadurch gekennzeichnet, dass** bei Durchführung des Nachprägeschritts (56) gemäß b) und c) ein ein Oberwerkzeug (68) und ein Unterwerkzeug (72) umfassendes Prägewerkzeug eingesetzt wird, mit dessen Oberwerkzeug (68) die eckige Kanalform (60) einerseits und andererseits mit dessen Aufsparungen aufweisendem Unterwerkzeug (72) zwischen in der ersten Kanaltiefe verbleibenden Erhebungen (62, 76, 78) durch Rückpressen in der erforderlichen Kanaltiefe (64) ausgebildete Bereiche erzeugt werden.

8. Verfahren gemäß den Ansprüchen 1 bis 7, **dadurch gekennzeichnet, dass** die Erhebungen (62, 76, 80) als einfacher Schweißbuckel (62) oder als Doppelbuckel (76) oder als verkleinerter Schweißbuckel (80) ausgeführt werden.

9. Verfahren gemäß den Ansprüchen 1 bis 8, **dadurch gekennzeichnet, dass** gemäß Verfahrensschritt d) die Heftpunkte (82) durch Widerstandsschweißen zur Erzeugung eines technischen Null-Spalts (86) zwischen dem Anodenblech (22) und dem Kathodenblech (24) der Bipolarplatte (14) dienen.

10. Verfahren gemäß den Ansprüchen 1 bis 3, **dadurch gekennzeichnet, dass** gemäß Verfahrensschritt e) die Fügenaht (84) durch Laserstrahlschweißen oder Schmelzschweißverfahren, wie Elektronenstrahlschweißen oder Plasmaschweißen erzeugt wird.

11. Verfahren gemäß den Ansprüchen 1 bis 9, **dadurch gekennzeichnet, dass** die Heftpunkte (82) innerhalb oder außerhalb eines durch die Fügenaht (84) abzudichtenden Bereichs angeordnet werden, wobei die Fügenaht (84) entweder gerade verläuft oder einen schlangenlinien- oder mäanderförmigen Verlauf zwischen den Heftpunkten (82) nimmt.

12. Verwendung des Verfahrens gemäß einem der Ansprüche 1 bis 11 zur Herstellung einer Bipolarplatte (14), mindestens ein Anodenblech (22) und mindestens ein Kathodenblech (24) enthaltend.

## Claims

1. Method for producing a bipolar plate (14) with an anode sheet (22) and a cathode sheet (24) of a fuel cell (10) comprising at least the following method steps:
a) carrying out a first embossing step (52) in the anode sheet (22) and/or the cathode sheet (24) for forming channels (32) with greatest possible roundings to create a first channel depth (50),
b) in a re-embossing step (56), reduced radii and a required channel depth (64) as well as planar regions are created in the anode sheet (22) and/or in the cathode sheet (24) in such a way that,
c) by suitable formation of the embossing tool (68, 72), elevations (62, 76, 80) in the first channel depth (50) remain in the anode sheet (22) and/or the cathode sheet (24) when method step b) is carried out,
d) creating bonding points (82) between the anode sheet (22) and the cathode sheet (24) by resistance welding at the elevations (62, 76, 80) and
e) creating a joining seam (84) to ensure a tightness between the anode sheet (22) and the cathode sheet (24).

2. Method according to Claim 1, **characterized in that** a sheet thickness (88) of the anode sheet (22) and of the cathode sheet (24) lies below 300 µm, in particular below 100 µm.

3. Method according to Claims 1 and 2, **characterized in that** capacitor discharge welding is used as the resistance welding method according to method steps d) and/or e).

4. Method according to Claims 1 and 2, **characterized in that** in method step e) the joining seam (84) is produced by a laser welding method.

5. Method according to Claims 1 to 4, **characterized in that**, in the first embossing step (52) according to method step a), channels (32) are created with channel radii (54) that allow formation of a first channel depth (50) exceeding the required channel depth (64).

6. Method according to Claims 1 to 5, **characterized in that**, in the re-embossing step (56) according to method step b), the channel radii (54) are re-embossed, an angular channel shape (60) is formed and planar contact areas (36, 78) are fashioned.

7. Method according to Claim 6, **characterized in that**, when carrying out the re-embossing step (56) according to b) and c), an embossing tool comprising an upper tool (68) and a lower tool (72) is used, with the upper tool (68) of which the angular channel shape (60) is created on the one hand and with the lower tool (72) of which, having cutouts, regions formed in the required channel depth (64) are created between elevations (62, 76, 78) remaining in the first channel depth by pressing back.

8. Method according to Claims 1 to 7, **characterized in that** the elevations (62, 76, 80) are made as a single weld bulge (62) or as double bulges (76) or as a reduced weld bulge (80).

9. Method according to Claims 1 to 8, **characterized in that**, according to method step d), the bonding points (82) created by resistance welding serve for creating a technical zero gap (86) between the anode sheet (22) and the cathode sheet (24) of the bipolar plate (14).

10. Method according to Claims 1 to 3, **characterized in that**, according to method step e), the joining seam (84) is created by laser beam welding or fusion welding methods, such as electron beam welding or plasma welding.

11. Method according to Claims 1 to 9, **characterized in that** the bonding points (82) are arranged inside or outside a region to be sealed off by the joining seam (84), wherein the joining seam (84) either runs in a straight line or assumes a serpentine or meandering course between the bonding points (82).

12. Use of the method according to one of Claims 1 to 11 for producing a bipolar plate (14), comprising at least one anode sheet (22) and at least one cathode sheet (24).

## Revendications

1. Procédé de fabrication d'une plaque bipolaire (14) avec une tôle d'anode (22) et une tôle de cathode (24) d'une pile à combustible (10), avec au moins les étapes de procédé suivantes :
a) mise en œuvre d'une première étape d'estampage (52) dans la tôle d'anode (22) et/ou la tôle de cathode (24) pour former des canaux (32) avec des arrondis aussi grands que possible pour produire une première profondeur de canal (50),
b) dans une étape d'estampage ultérieure (56), des rayons réduits et une profondeur de canal requise (64) ainsi que des zones planes sont produits dans la tôle d'anode (22) et/ou dans la tôle de cathode (24) de telle manière que
c) des parties surélevées (62, 76, 80) dans la première profondeur de canal (50) subsistent dans la tôle d'anode (22) et/ou la tôle de cathode (24) par formation appropriée de l'outil d'estampage (68, 72) lors de la mise en œuvre de l'étape de procédé b),
d) production de points de collage (82) par soudage par résistance sur les parties surélevées (62, 76, 80) entre la tôle d'anode (22) et la tôle de cathode (24), et
e) production d'un cordon d'assemblage (84) pour assurer une étanchéité entre la tôle d'anode (22) et la tôle de cathode (24).

2. Procédé selon la revendication 1, **caractérisé en ce qu'**une épaisseur de tôle (88) de la tôle d'anode (22) et de la tôle de cathode (24) est inférieure à 300 µm, en particulier inférieure à 100 µm.

3. Procédé selon les revendications 1 à 2, **caractérisé en ce que** le soudage par décharge de condensateur est utilisé comme procédé de soudage par résistance selon les étapes de procédé d) et/ou e).

4. Procédé selon les revendications 1 à 2, **caractérisé en ce que**, dans l'étape de procédé e), le cordon d'assemblage (84) est fabriqué par un procédé de soudage au laser.

5. Procédé selon les revendications 1 à 4, **caractérisé en ce que** sont produits, dans la première étape d'estampage (52) selon l'étape de procédé a), des canaux (32) avec des rayons de canal (54), qui permettent de former une première profondeur de canal (50) dépassant la profondeur de canal requise (64).

6. Procédé selon les revendications 1 à 5, **caractérisé en ce que** dans l'étape d'estampage ultérieure (56) selon l'étape de procédé b), les rayons de canal (54) sont estampés ultérieurement, une forme de canal angulaire (60) est formée et des surfaces d'appui planes (36, 78) sont estampées.

7. Procédé selon la revendication 6, **caractérisé en ce qu'**est utilisé, lors de la mise en œuvre de l'étape d'estampage ultérieure (56) selon b) et c), un outil d'estampage comprenant un outil supérieur (68) et un outil inférieur (72), dont l'outil supérieur (68) permet de produire d'une part la forme de canal angulaire (60) et dont l'outil inférieur (72) comportant des évidements permet de produire d'autre part des zones formées par refoulement dans la profondeur de canal requise (64) entre des parties surélevées (62, 76, 78) restant dans la première profondeur de canal.

8. Procédé selon les revendications 1 à 7, **caractérisé en ce que** les parties surélevées (62, 76, 80) sont réalisées comme un simple bossage de soudage (62) ou un double bossage (76) ou un bossage de soudage réduit (80).

9. Procédé selon les revendications 1 à 8, **caractérisé en ce que**, selon l'étape de procédé d), les points de collage (82) servent, par soudage par résistance, à produire un intervalle technique nul (86) entre la tôle d'anode (22) et la tôle de cathode (24) de la plaque bipolaire (14).

10. Procédé selon les revendications 1 à 3, **caractérisé en ce que**, selon l'étape de procédé e), le cordon d'assemblage (84) est produit par soudage par faisceau laser ou par un procédé de soudage par fusion, comme le soudage par faisceau électronique ou le soudage au plasma.

11. Procédé selon l'une des revendications 1 à 9, **caractérisé en ce que** les points de collage (82) sont disposés à l'intérieur ou à l'extérieur d'une zone à étanchéifier par le cordon d'assemblage (84), le cordon d'assemblage (84) s'étendant soit en ligne droite soit suivant un tracé sinueux ou en forme de méandres entre les points de collage (82).

12. Utilisation du procédé selon l'une des revendications 1 à 11 pour la fabrication d'une plaque bipolaire (14) contenant au moins une tôle d'anode (22) et au moins une tôle de cathode (24).
